(19) Europäisches Patentamt
European Patent Office
Office européen des brevets

(11) EP 4 513 203 B1

## (12) EUROPEAN PATENT SPECIFICATION

(45) Date of publication and mention
of the grant of the patent:
**17.06.2026 Bulletin 2026/25**

(21) Application number: **23193502.4**

(22) Date of filing: **25.08.2023**

(51) International Patent Classification (IPC):
**G01R 31/26** (2020.01)      **G01R 31/28** (2006.01)

(52) Cooperative Patent Classification (CPC):
**G01R 31/2642; G01R 31/2817**

(54) **METHOD AND APPARATUS FOR ESTIMATING CYCLIC THERMAL STRESS**

VERFAHREN UND VORRICHTUNG ZUR SCHÄTZUNG VON ZYKLISCHER THERMISCHER BELASTUNG

PROCÉDÉ ET APPAREIL D'ESTIMATION DE CONTRAINTE THERMIQUE CYCLIQUE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(43) Date of publication of application:
**26.02.2025 Bulletin 2025/09**

(73) Proprietor: **ABB SCHWEIZ AG
5400 Baden (CH)**

(72) Inventors:
• **Voloskin, Juri
00380 Helsinki (FI)**
• **Mattila, Martti
00380 Helsinki (FI)**
• **Kukkola, Jarno
00380 Helsinki (FI)**

(74) Representative: **Kolster Oy Ab
Salmisaarenaukio 1
P.O. Box 204
00181 Helsinki (FI)**

(56) References cited:
**EP-A1- 4 099 032      EP-B1- 3 373 019**

**Description**

TECHNICAL FIELD

The present invention relates to estimating a cyclic thermal stress, and more particularly to estimating a cyclic thermal stress of a power semiconductor device.

BACKGROUND

Power semiconductor devices, such as power transistors, thyristors and diodes, or modules thereof, may be used in power electronic devices, such as electric power converter devices or components thereof. Examples of electric power converter devices include variable-frequency drives and grid-feeding inverters. An example of a power transistor is an Insulated Gate Bipolar Transistors (IGBT).

An example of a stressor for a power semiconductor device, such as an IGBT module, is temperature. As an example, possibly excessive stress caused by temperature cycling can substantially accelerate e.g. material fatigue, which might lead to premature component failure, for instance. Hence, the ability to monitor or evaluate the cyclic thermal stress of a power semiconductor device would be beneficial in establishing control over the power semiconductor device longevity.

A problem related to the above is that power electronic devices and systems comprising such power semiconductor devices may provide little to no insight into the thermal stress level of the power semiconductor devices therein.

EP 4099032 A1 discloses a method and a system for increasing the lifetime of at least two power dies or power modules. The disclosed solution senses the temperature of the power dies or the power modules, identifies, for each power die or power module, temperature cycles from the sensed temperatures, determines, for each power die or power module, reliability parameters from the identified temperature cycles, determines, for each power die or power module, reference temperatures, subtracts, for each power die or power module, the sensed temperature of the power die or power module from the determined reference temperature of the power die or power module, and adjusts the duration of the conducting time and/or the switching delay of at least one power die or power module according to the sign of the output of the subtraction.

BRIEF DESCRIPTION

An object of the present invention is thus to provide a method and an apparatus for implementing the method so as to overcome the above problem or at least to alleviate the problem. The objects of the invention are achieved by a method, a computer program, a computer readable medium and an apparatus according to the independent claims. The preferred embodiments of the invention are disclosed in the dependent claims.

The invention is based on the idea of extracting from a temperature data thermal cycle data on characteristic quantities of more than one thermal cycles of a power semiconductor device, determining a thermal cycling operating point of the power semiconductor device on the basis of the extracted thermal cycle data, and determining an estimate of the cyclic thermal stress of the power semiconductor device on the basis of the determined thermal cycling operating point of the power semiconductor device and a cyclic thermal stress model of the power semiconductor device, wherein the cyclic thermal stress model comprises data indicative of a stress level of the power semiconductor device at predetermined thermal cycling operating points of the power semiconductor device.

An advantage of the solution of the invention is that the solution enables to determine an estimate of the cyclic thermal stress of the power semiconductor device which estimate can then be used for evaluating an impact of the temperature cycling on the power semiconductor device.

BRIEF DESCRIPTION OF THE DRAWINGS

In the following, the invention will be described in greater detail by means of preferred embodiments with reference to the accompanying drawings, in which

Figure 1 illustrates a block diagram of an exemplary system;
Figure 2 illustrates a block diagram of an exemplary system;
Figure 3 illustrates an example according to an embodiment;
Figure 4 illustrates an example according to an embodiment;
Figure 5 illustrates an example according to an embodiment;
Figure 6 illustrates a flow chart according to an embodiment; and
Figure 7 illustrates an example according to an embodiment.

DETAILED DESCRIPTION

The following embodiments are exemplary. Although the description may refer to "an", "one", or "some" embodiment(s) in several locations, this does not necessarily mean that each such reference is to the same embodiment(s), or that the feature only applies to a single embodiment, for example. Single features of different embodiments may also be combined to provide other embodiments. Generally, all terms and expressions used should be interpreted broadly and they are intended to illustrate, not to restrict, the embodiments. The figures only show components necessary for understanding the various embodiments. The number and/or configuration of the various elements, and generally their implementation, could vary from the examples shown in the figures, for instance.

Different embodiments and examples may be described below using single units, models, equipment and memory, without restricting the embodiments/examples to such a solution. Concepts called cloud computing and/or virtualization may be used. The virtualization may allow a single physical computing device to host one or more instances of virtual machines that appear and operate as independent computing devices, so that a single physical computing device can create, maintain, delete, or otherwise manage virtual machines in a dynamic manner. It is also possible that device operations will be distributed among a plurality of servers, nodes, devices or hosts. In possible cloud computing network devices, computing devices and/or storage devices may provide shared resources. Some other technology advancements, such as Software-Defined Networking (SDN), may cause one or more of the functionalities described below to be migrated to any corresponding abstraction or apparatus or device. Therefore, all words and expressions should be interpreted broadly, and they are intended to illustrate, not to restrict, the embodiment in question.

The various embodiments described herein are generally applicable to and in connection with various power semiconductor devices (e.g. components), such as power transistors, thyristors and diodes, or modules thereof, such as power electronic modules comprising two or more power semiconductor components. Some possible examples of such power semiconductor devices may include e.g. controllable power semiconductor switches, such as IGBTs (Insulated-Gate Bipolar Transistor) or FETs (Field-Effect Transistor). Such power semiconductor device(s) may reside in a power electric device or system. An example of such a power electric device is an electric drive, which herein generally refers to an electronic apparatus, which may be used to regulate the performance of an electric motor or another electric load, for example. An electric drive may control the power, frequency and/or current supplied to the motor or other load, for instance. An electric drive and an electric motor controlled by the electric drive may form an electric drive system. An electric drive may comprise one or more electric power converter units or modules, such as rectifiers, inverters and/or frequency converters, for example, which may comprise various power semiconductor devices.

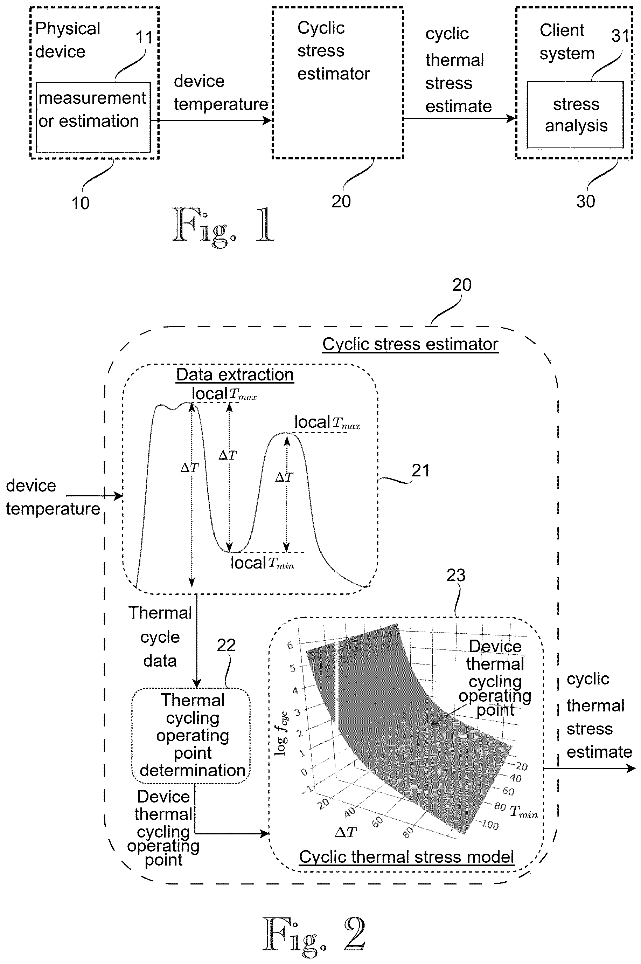

Figure 1 is a simplified block diagram of an example illustrating the general context in which the various embodiments described herein may be implemented and utilized, for example. Figure 1 shows some equipment (e.g. apparatuses, devices, nodes) and functional entities (blocks), whose implementation and/or number and/or configuration may differ from what is shown in the example of Figure 1. The connections shown in Figure 1 are logical connections and corresponding actual physical connections could be different. Such a system may also comprise other equipment, functional entities and/or structures, some of which used in or for big data, data management, and communication in the system or in any part of the system, for example. Also e.g. any communications protocols used may vary and may depend on the system characteristics, for instance. In the example, temperature data indicative of a temperature relating to a physical power semiconductor device 10 may be obtained e.g. by suitable measurement arrangement or estimation arrangement in block 11. Possible measurement may be performed by means of one or more temperature sensors configured to measure the temperature inside and/or outside the power semiconductor device 10, e.g. at one or more predetermined locations therein. The device temperature data is analyzed and a cyclic thermal stress estimate of the power semiconductor device 10 is determined on the basis of the analyzed temperature data in a cyclic stress estimator block 20 which receives the device temperature data. The determined cyclic thermal stress estimate of the power semiconductor device 10 may then be further utilized in various ways to e.g. analyze the thermal stress of the power semiconductor device 10 and/or the impact of temperature cycling on the device longevity. In the example of Figure 1, the determined cyclic thermal stress estimate is transmitted to block 30, which may be a client system or any other system which may utilize the determined cyclic thermal stress estimate. As an example, further stress analysis may be performed based on the cyclic thermal stress estimate of the power semiconductor device 10 as exemplified by block 31.

The temperature data indicative of the temperature relating to the power semiconductor device 10 obtained e.g. by suitable measurement or by estimation may relate to a specific predetermined point of or within the power semiconductor device 10, such as a case or junction temperature measurement or an otherwise reliable estimate from a thermal model. As an example, the cyclic thermal stress estimate of the power semiconductor device 10 may provide the stress estimate of the power semiconductor device in one or more of predetermined weak points of the device in question, for example. The notion of a weak point in this context generally means a physical location in which the power semiconductor device 10 may be most likely to fail when subjected to continuous cyclic thermal stress, for example. If the power semiconductor device 10 has multiple weak points susceptible to temperature cycling, multiple cyclic thermal stress estimates could be determined in parallel, for instance. For example, in IGBT modules manufactured with a laminate packaging process, one possible weak point susceptible to temperature cycling may be the chip solder lamination layer. Degradation of this layer may eventually impair component cooling capacity, which may ultimately lead to the IGBT module overheating and failure. Consequently, the temperature data indicative of the temperature relating to the power semiconductor device 10 may be a measured or estimated temperature of a known or generally predetermined point, such as a weak point, of the power semiconductor device.

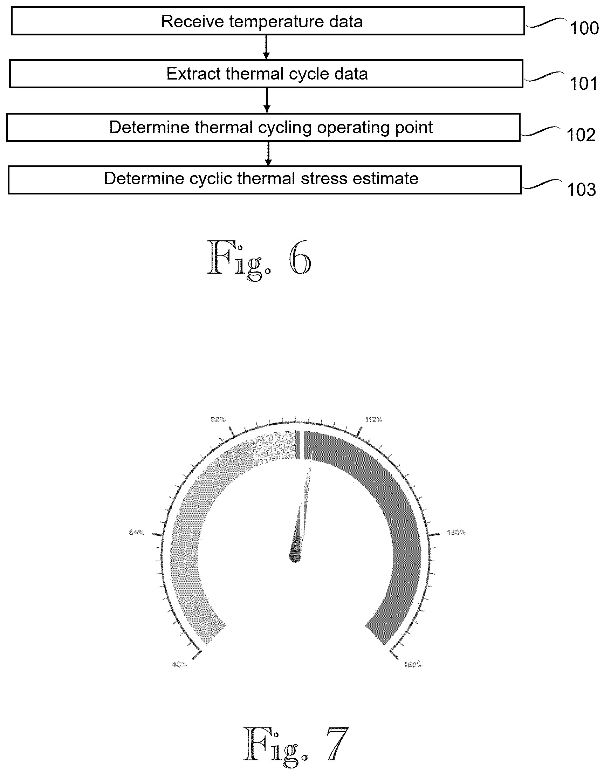

As exemplified in Figure 6, a method for estimating a cyclic thermal stress of a power semiconductor device comprises receiving 100 temperature data indicative of a temperature relating to the power semiconductor device and extracting 101, from the received temperature data, thermal cycle data on characteristic quantities of more than one thermal cycles of the power semiconductor device. The method further comprises determining 102 a thermal cycling operating point of the power semiconductor device on the basis of the extracted thermal cycle data and determining 103 an estimate of the cyclic thermal stress of the power semiconductor device on the basis of the determined thermal cycling operating point of the power semiconductor device and a cyclic thermal stress model of the power semiconductor device, wherein the cyclic thermal stress model comprises data indicative of a stress level of the power semiconductor device at predetermined thermal cycling operating points of the power semiconductor device.

Figure 2 is a simplified block diagram of an example illustrating the operation of the cyclic stress estimator 20 according to an embodiment. The exemplary cyclic stress estimator 20 may implement the method for estimating the cyclic thermal stress of the power semiconductor device and the functionality thereof may be implemented e.g. by suitable means configured to implement the steps of the method, or corresponding functionality, according to any embodiment described herein. The exemplary solution shown in Figure 2 comprises three main blocks: a data extraction block 21, a thermal cycling operating point determination block 22 and a cyclic thermal stress model block 23. The operation performed in the cyclic stress estimator 20 is described in more detail in the following according to exemplary embodiments.

Generally, according to an embodiment, in the example of Figure 2, the device temperature signal, comprising the device temperature data, i.e. generally data indicative of a temperature relating to the power semiconductor device 10, is received by the data extraction block 21 that extracts predetermined information about temperature cycling, i.e. the thermal cycle data. Moreover, the thermal cycling operating point determination block 22 determines a thermal cycling operating point of the device 10 based on the extracted thermal cycle data. Finally, the cyclic thermal stress model block 23 converts the determined device thermal cycling operating point into a corresponding cyclic thermal stress estimate and may output the estimate in a suitable manner. According to an embodiment, the cyclic stress estimator 20 may continuously, or e.g. at predetermined time periods, observe the device temperature signal for cyclic variations. According to an embodiment, the goal may be to extract temperature cycles that cause strain beyond the resilience region of elastic material deformation at the weak point. The method for extracting this cycling information from the temperature signal is a matter of design choice. For example, the Rainflow-counting algorithm is a well-established method for capturing stress cycles correlating with fatigue of material in a physical component (device). Thus, according to an embodiment, the Rainflow-counting algorithm can be used to process the real-time device temperature signal and extract e.g. the most prominent variations for each period of temperature cycling. Preferably, the sampling frequency of the temperature signal should be high enough to capture the shortest meaningful period of temperature cycling. As an example, if the shortest meaningful period of a thermal cycle is 100ms, then the sampling frequency should be no lower than 20Hz. However, the particular sampling frequency used may vary and may depend on the system characteristics.

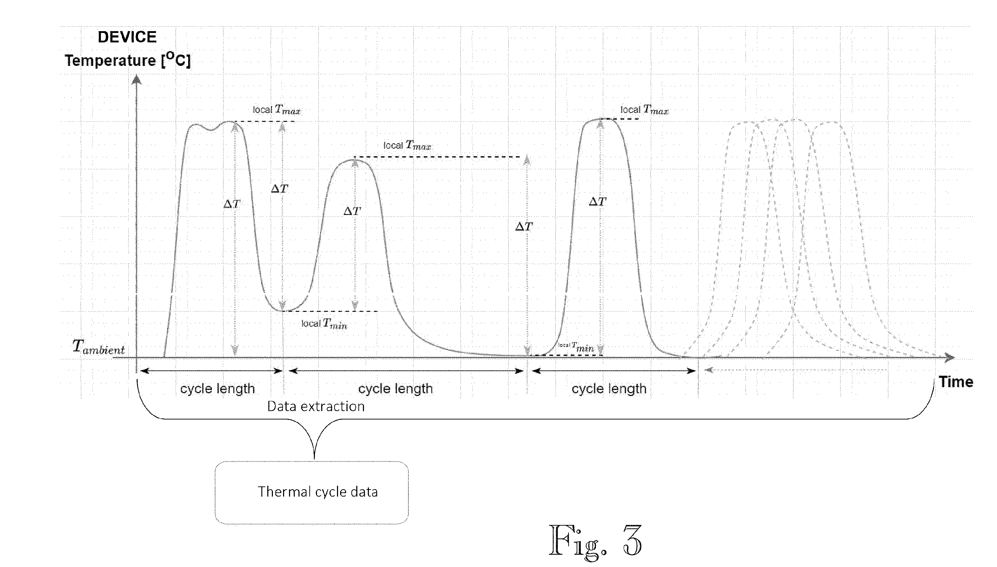

Figure 3 shows an example illustrating the device temperature signal, comprising the device temperature data. In the example three temperature cycles with different cycle lengths have been shown in detail. According to an embodiment, possible characteristic quantities (variables) of each such single cycle may be the cycle length time, the (e.g. local) lowest (temperature) point of the temperature cycle $T_{min}$ [°C] and/or the (e.g. local) highest (temperature) point of the temperature cycle $T_{max}$ [°C] and a temperature cycle variation $\Delta T$ [°C], for example. In the example, the reference temperature used is the ambient temperature of the device $T_{ambient}$ [°C]. It should be noted, however, that other characteristic quantities (variables) could be used instead for describing the temperature cycling and comprised in the thermal cycle data extracted from the temperature data.

According to an embodiment, the information about temperature cycling over time and the corresponding device thermal cycling operating point can be represented using any basis spanning the space of all possible forms of a periodic (temperature) signal, for example. As an illustrative example, a basis consisting of the following three variables may be used herein: the lowest point of the temperature cycle $T_{min}$ [°C], the temperature cycle variation $\Delta T$ [°C] and an average frequency of thermal cycling $f_{cyc}$ [cycles per time period]. According to an embodiment, this triplet $(T_{min}, \Delta T, f_{cyc})$, i.e. single values of the variables, can determine the current thermal cycling operating point of the power semiconductor device 10. As an example of an alternative basis, the triplet $(T_{min}, T_{max}, f_{cyc})$, where $T_{max}$ [°C] is the highest point of the temperature cycle, could also be used to represent temperature cycling if it happens to be more convenient, for example.

According to an embodiment, the frequency of thermal cycling may imply tracking the count of a plurality of temperature cycles over a predetermined, e.g. meaningful, period of time. Moreover, according to an embodiment, obtaining a possibly long-term temperature cycling pattern may require suitable processing of temperature cycling data, e.g. using an observation period long enough to detect the lowest meaningful cycling frequency $f_{cyc} > 0$. Consequently, the thermal cycle data comprises data of more than one thermal cycles of the power semiconductor device, wherein the determining of the thermal cycling operating point of the power semiconductor device comprises averaging the thermal cycle data of the power semiconductor device over a predetermined time period. One possible approach to extract such long-term cycling tendencies from the device load profile is thus to take an average of each component of thermal cycle triplet ($T_{min}$, $\Delta T$, $f_{cyc}$) over a longer time period, e.g., every hour, or every 24 hours or any other period of time depending on the system, of observations to determine the device thermal cycling operating point. According to an embodiment, such averaging could be implemented in a moving window fashion by using a suitable window length, for example. In any case, the exact approach to thermal cycle data processing to determine the device thermal cycling operating point is up to the system characteristics and requirements, as it essentially has a filtering effect on the resulting output of the method.

The power semiconductor device thermal cycling operating point thus determined on the basis of the extracted thermal cycle data is fed into the cyclic thermal stress model 23 that can encode the power semiconductor device's capacity to endure thermal cycling with respect to its life expectancy, for example. The cyclic thermal stress model 23 may then be used to transform the device thermal cycling operating point, e.g. triplet ($T_{min}$, $\Delta T$, $f_{cyc}$), into the device cyclic thermal stress estimate. Examples of possible implementation of the cyclic thermal stress model are provided below.

According to an embodiment, the cyclic thermal stress model 23 comprises data indicative of a stress level of the power semiconductor device at predetermined thermal cycling operating points of the power semiconductor device. It can thus encode the knowledge on the capacity of the power semiconductor device 10 to withstand cyclic thermal stress for a certain period of time. This knowledge preferably comes in the form of statistical data containing empirical evidence of component life expectancy when operated under an electric load causing temperature variations, for example. As an example, history data of the power semiconductor device or device type and/or data obtained by simulations may be utilized. From now on, this cyclic thermal stress model data will be referred to as stress model data or SMD. The ways of acquisition and validation of such data may vary and depend on the device and/or system in question. It may be generally assumed, however, that the SMD can be acquired using protocols that adhere to the standards of material science, for example.

According to an embodiment, the SMD may comprise of one or more sets $D^{(\tau)}$, where $\tau \in \mathbb{R}_{\geq 0}$ represents the expected lifetime period. Each such data set $D^{(\tau)}$ may consist of predetermined thermal cycling operating points of the power semiconductor device at which the impact of thermal stress limits the device life expectancy to a certain time period (e.g. days/months/years) denoted by $\tau$. According to an embodiment, the expected lifetime period denoted by $\tau$ may thus indicate the stress level, e.g. such that the lower the expected lifetime period is the higher the respective stress level is, and vice versa. Consequently, the expected lifetime period denoted by $\tau$ may be used to define a predetermined stress threshold level as will be explained in more detail in the examples below. Just like with thermal cycling information, the SMD format can vary depending on the system characteristics and designer preference, for example, though it may be preferable to use the same representation form for the cyclic thermal stress model as for the determined device thermal cycling operating point.

As an example, consider SMD comprising two exemplary sets $D^{(10.5)}$ and $D^{(15)}$. The first set of triplets

$$\left( T_{min}, \Delta T, f_{cyc}^{(10.5)} \right) \in D^{(10.5)}$$

consists of predetermined thermal cycling operating points of the power semiconductor device at which the impact of thermal stress corresponds to the expected lifetime of $\tau_1 = 10.5$ years. By definition, any thermal cycling operating point positioned above the threshold level formed by points in $D^{(10.5)}$ poses a high risk of failure prior to the expected lifetime period of 10.5 years. Analogously, the second set of triplets

$$\left( T_{min}, \Delta T, f_{cyc}^{(15)} \right) \in D^{(15)}$$

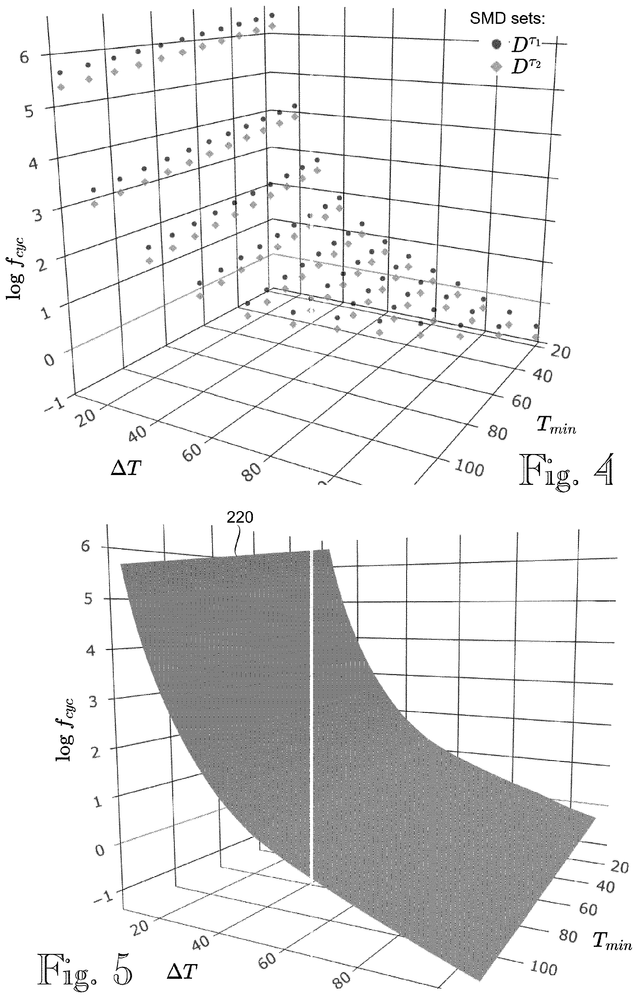

consists of thermal cycle thresholds that correspond to the expected lifetime of $\tau_2 = 15$ years, which implies a lower impact of thermal stress compared to $D^{(10.5)}$. Both SMD example sets are illustrated in Figure 4. Figure 4 thus is a visual representation of exemplary stress model data consisting of two example sets of points: $D^{(\tau_1)}$ (marked as circles in the Figure) representing a higher-stress threshold and $D^{(\tau_2)}$ (marked as diamonds in the Figure) representing lower-stress threshold points of thermal cycle operation.

According to an embodiment, depending on e.g. data availability, as many $D^{(\tau)}$ data sets may be provided as needed, since more data permits more accurate stress estimate, for example. According to an embodiment, any SMD consisting of $n \in \{1, 2, ..., +\infty\}$ number of sets should preferably satisfy the following conditions:

    i. All points within a particular set $D^{(\tau_i)}$ should preferably have the same physical interpretation. That is, they represent all the power semiconductor device thermal cycling operating points corresponding to the same life expectancy period $\tau_i$. For a different set $D^{(\tau_j)}$, where $j \neq i$, all points within $D^{(\tau_j)}$ correspond to the life expectancy period $\tau_j$, such that $\tau_j \neq \tau_i$, where $i$, $j$ are integer indices in the range from 1 to $n$.

    ii. For multiple sets in SMD, these sets should preferably be organized in the ascending order - starting from the shortest lifespan, ending with the longest one. Formally, when $n > 1$, for every $i \in \{2, ..., n\}$, it should hold that $\tau_{i-1} < \tau_i$ and

for every point $\left(T_{min}, \Delta T, f_{cyc}^{(\tau_i)}\right) \in D^{(\tau_i)}$ there is a corresponding point $\left(T_{min}, \Delta T, f_{cyc}^{(\tau_{i-1})}\right) \in D^{(\tau_{i-1})}$ such that $f_{cyc}^{(\tau_{i-1})} > f_{cyc}^{(\tau_i)}$.

According to an embodiment, the SMD may have an unlimited number of sets, if $D^{(\tau)}$ can be generated by a simulation algorithm or formulated analytically for any $\tau \in \mathbb{R}_{\geq 0}$, for instance. E.g., the so-called *S-N curves* commonly used in fatigue testing, where *S* represents a stressor input and *N* is the number of cycles the component (device) can endure before it fails when subjected to the stress input *S*. These S-N curves are sometimes available in analytical form across all possible combinations of the stressor S input. It is then possible to construct any $D^{(\tau)}$ from an *S-N curve,* as there is a natural connection between the frequency measure $f_{cyc}^{(\tau)}$ and the number of thermal cycles $N(T_{min}, \Delta T)$ the component is expected to last if subjected to temperature variation stress S characterized here by the ordered pair ($T_{min}$, $\Delta T$). That is, for every thermal cycle input ($T_{min}$, $\Delta T$), the cycling frequency $f_{cyc}^{(\tau)}$ can be computed from *N* as follows:

$$f_{cyc}^{(\tau)} = \frac{N(T_{min}, \Delta T)}{\tau \cdot k}, \ \forall\left(T_{min}, \Delta T, f_{cyc}^{(\tau)}\right) \in D^{(\tau)}, \ \tau, k \in \mathbb{R}_{\geq 0}, \qquad (1)$$

where *k* is a scaler converting the time unit of $\tau$ to the corresponding time unit of $f_{cyc}^{(\tau)}$ period.

According to an embodiment, if analytical representation is not readily available, SMD data may be obtained from a limited number of measurements in a form akin to the example shown in Figure 4, for instance. For such cases, all SMD-comprising sets $D^{(\tau_i)}$ may consist of a finite number of discrete points. Yet, the domain of *thermal cycles* is continuous. That is, the SMD might not provide an exhaustive stress threshold coverage but merely outlines a trend. To make the SMD information practical, the data should preferably be extrapolated to the entire (continuous) domain of thermal cycles. Thus, according to an embodiment, the data of the cyclic thermal stress model, or SMD, comprises at least one continuous set of predetermined thermal cycling operating points of the power semiconductor device defining a predetermined stress threshold level. According to an embodiment, the data of the cyclic thermal stress model could comprise an unlimited number of such continuous sets of predetermined thermal cycling operating points of the power semiconductor device defining predetermined stress threshold levels. Generally, the number of such continuous sets of predetermined thermal cycling operating points of the power semiconductor device may be 1, 2, 3, 4, 5 or more. According to an embodiment, the data of the cyclic thermal stress model, or SMD, comprises at least a first continuous set of predetermined thermal cycling operating points of the power semiconductor device defining a first predetermined stress threshold level and a second continuous set of predetermined thermal cycling operating points of the power semiconductor device defining a second predetermined stress threshold level. According to an embodiment, the first predetermined stress threshold level represents a higher stress level than the second predetermined stress threshold level. Examples are provided below.

According to an embodiment, it is possible to construct continuous variants of the $D^{(\tau)}$ threshold set(s) in the continuous domain, defining predetermined stress threshold level(s), by fitting a suitable regression model to the SMD points, for example. In such a solution, the regression model can be defined as a non-linear parametric function $\mu: \mathbb{R}^2 \to \mathbb{R}$ that maps the temperature pair ($T_{min}$, $\Delta T$) to the corresponding cycling frequency threshold $\hat{f}_{cyc}$. That is, $\hat{f}_{cyc} = \mu(T_{min}, \Delta T | \boldsymbol{p})$, where (vector) $\boldsymbol{p} = [p_1, ..., p_m]$ is a list of length m number of parameter values required by the model $\mu$.

The lists of model parameters $\boldsymbol{p}$ can be acquired by solving the Least Squares optimization problem, for example. In the example below, two parameter lists are sought:

$$\boldsymbol{p}^{(\tau_1)} = \arg\min_{\boldsymbol{p}} \left\{ \sum_{\left(T_{min},\, \Delta T,\, f_{cyc}^{(\tau_1)}\right) \in D^{(\tau_1)}} \left[ \mu(T_{min},\, \Delta T \mid \boldsymbol{p}) - f_{cyc}^{(\tau_1)} \right]^2 \right\},$$

$$\boldsymbol{p}^{(\tau_2)} = \arg\min_{\boldsymbol{p}} \left\{ \sum_{\left(T_{min},\, \Delta T,\, f_{cyc}^{(\tau_2)}\right) \in D^{(\tau_2)}} \left[ \mu(T_{min},\, \Delta T \mid \boldsymbol{p}) - f_{cyc}^{(\tau_2)} \right]^2 \right\}.$$

$$(2)$$

The solutions for parameters $\boldsymbol{p}$ may be based on the data from the SMD sets. That is, to acquire the list of parameters $\boldsymbol{p}^{(\tau1)}$ for the higher-stress model, the optimization problem solved for the points in the set $D^{(\tau1)}$. Similarly, the parameter $\boldsymbol{p}^{(\tau2)}$ list for the lower-stress model is acquired using the data from $D^{(\tau2)}$.

Generally, the selection of regression model $\mu$ is a design choice and may depend on the stress-strain characteristics of the power semiconductor device weak point(s) susceptible to temperature cycling, for example. The only requirement for the selected model may be that the resulting regression fit satisfies the SMD properties (i) and (ii). Even if finding a proper analytical representation is difficult, the regression model could be formulated as a piece-wise function, e.g., using linear interpolation between the discrete points of every set $D^{(\tau i)}$ in SMD, for instance.

An example of a model that captures the relation between temperature variation ($T_{min}$, $\Delta T$) and cycling frequency threshold $\hat{f}_{cyc} = \mu(T_{min},\, \Delta T \mid \boldsymbol{p})$ is given below:

$$\ln \mu(T_{min},\, \Delta T \mid \boldsymbol{p}) = p_1 + p_2 T_{min} + p_3 e^{p_4 \Delta T} + p_5 e^{p_6 \Delta T} + p_7 e^{p_8 \Delta T}.$$

$$(3)$$

In this example, the model $\mu$ has eight (m = 8) parameters $\boldsymbol{p} = [p_1, ..., p_8]$. In practice, it is up to the designer to find the right tradeoff between model accuracy (number of parameters) and its complexity (cost of model execution). Hence, the number of parameters may vary. The regression model may be generally non-linear. Moreover, when solving for parameter vector $\boldsymbol{p}$, the objective function is likely to become non-convex which may add up to the challenge of solving the related optimization problem. Nevertheless, classical optimization methods, such as Gradient Descent or the Levenberg-Marquardt algorithm, tend to demonstrate very robust convergence behavior for the class of regression models that satisfy the SMD properties.

With the help of the regression model $\mu$, discrete SMD sets can now be expanded in the continuous domain and reformulated as continuous sets $\hat{D}^{(\tau1)}$ and $\hat{D}^{(\tau2)}$:

$$\hat{D}^{(\tau_1)} = \left\{ \left( T_{min},\, \Delta T,\, \hat{f}_{cyc}^{(\tau_1)} \right) \in \mathbb{R}^3 \, : \, \hat{f}_{cyc}^{(\tau_1)} = \mu\left( T_{min},\, \Delta T \mid \boldsymbol{p}^{(\tau_1)} \right) \right\},$$

$$\hat{D}^{(\tau_2)} = \left\{ \left( T_{min},\, \Delta T,\, \hat{f}_{cyc}^{(\tau_2)} \right) \in \mathbb{R}^3 \, : \, \hat{f}_{cyc}^{(\tau_2)} = \mu\left( T_{min},\, \Delta T \mid \boldsymbol{p}^{(\tau_2)} \right) \right\},$$

$$(4)$$

where $\hat{D}^{(\tau1)}$ and $\hat{D}^{(\tau2)}$ contain thermal cycle thresholds approximated in the continuous domain. E.g., the continuous set of higher-stress thresholds $\hat{D}^{(\tau1)}$ may have its cyclic frequency estimated as $\hat{f}_{cyc}^{(\tau_1)} = \mu\left( T_{min},\, \Delta T \mid \boldsymbol{p}^{(\tau_1)} \right)$ for all meaningful combinations of $(T_{min},\, \Delta T) \in \mathbb{R}^2$. Similarly, the continuous set of lower-stress thresholds $\hat{D}^{(\tau2)}$ may be constructed using the estimated cycling frequency $\hat{f}_{cyc}^{(\tau_2)} = \mu\left( T_{min},\, \Delta T \mid \boldsymbol{p}^{(\tau_2)} \right)$.

The values of any $\hat{f}_{cyc}^{(\tau_i)}$ are the results of regression fit and hence might deviate from the points given in SMD. It is up to a person skilled in the art to select such a model (or models) $\mu$ that the values approximated in $\hat{D}^{(\tau i)}$ are sufficiently accurate and ensure they satisfy the SMD properties, which may depend on the system and/or device characteristics, for example.

Figure 5 illustrates an example of one set $\hat{D}^{(\tau 1)}$ obtained with the help of the regression model $\mu$ fit into the corresponding points of SMD data. The visual representation of the continuous set of thermal cycle stress thresholds $\hat{D}^{(\tau 1)}$ is plotted as a smooth surface 220 covering every point in the domain. The same holds for any other set $\hat{D}^{(\tau i)}$. Just like their discrete counterparts from SMD, the continuous sets $\hat{D}^{(\tau 1)}$ and $\hat{D}^{(\tau 2)}$ can demark stress threshold levels but in a continuous domain.

According to an embodiment, the notion of the power semiconductor device cyclic thermal stress may be generally regarded as a metric for quantifying the impact of temperature cycling on the long-term life expectancy of the device.

In the simplest case, the cyclic thermal stress estimate can be formulated as a classifier. Thus, according to an embodiment, the determining of the estimate of the cyclic thermal stress of the power semiconductor device comprises determining a relative position of the determined thermal cycling operating point of the power semiconductor device with respect to one or more of the predetermined stress threshold levels defined by the one of more continuous sets of the predetermined thermal cycling operating points of the power semiconductor. According to an embodiment, if two or more continuous sets of the predetermined thermal cycling operating points of the power semiconductor define two or more predetermined stress threshold levels, relative positions of the determined thermal cycling operating point of the power semiconductor device with respect to each one of two or more stress threshold levels may be determined. As an example, continuing the example from the previous section, a cyclic thermal stress model composed of e.g. two continuous sets $\hat{D}^{(\tau 1)}$ and $\hat{D}^{(\tau 2)}$ makes it possible to classify the power semiconductor device thermal cycling operating point as high stress, low stress or moderate stress, for instance. Such a classifier $\gamma \colon \mathbb{R}^3 \to \{high, low, moderate\}$ can be formulated e.g. as follows:

$$
\gamma\left(T_{min}, \Delta T, f_{cyc}\right) = \begin{cases} high, & if \left(T_{min}, \Delta T, f_{cyc}\right) \geq \left(T_{min}, \Delta T, \hat{f}_{cyc}^{(\tau_1)}\right) \\ low, & if \left(T_{min}, \Delta T, f_{cyc}\right) \leq \left(T_{min}, \Delta T, \hat{f}_{cyc}^{(\tau_2)}\right) \\ moderate, & otherwise \end{cases} .
$$

$$(5)$$

Such a categorical cyclic thermal stress estimate, i.e. classifier $\gamma$, may be already a useful indicator of the power semiconductor device operating condition, even if it is rather low in resolution.

For some purposes, it might be helpful to know not only whether the thermal cycling operating point is high or low stress, i.e. the relative position thereof, but also quantify e.g. how high/low it is on a relative numerical scale. Accordingly, the cyclic thermal stress estimate can be formulated as a numerical stress measure. Thus, according to an embodiment, the determining of the estimate of the cyclic thermal stress of the power semiconductor device may additionally or alternatively comprise determining at least one distance between the determined thermal cycling operating point of the power semiconductor device and one or more of the predetermined stress threshold levels defined by the one of more continuous sets of the predetermined thermal cycling operating points of the power semiconductor. According to an embodiment, if two or more continuous sets of the predetermined thermal cycling operating points of the power semiconductor define two or more predetermined stress threshold levels, distances between the determined thermal cycling operating point of the power semiconductor device and each one of two or more stress threshold levels may be determined.

As an example, let's introduce a stress measure $\psi \colon \mathbb{R}^3 \to \mathbb{R}_{\geq 0}$ that maps the power semiconductor device thermal cycling operating point to a non-negative numerical value. The SMD properties explained earlier permit constructing a formal definition for $\psi$. According to the SMD property (i) described earlier, all data points of $\hat{D}^{(\tau 1)}$ should preferably have the same physical interpretation. Hence, it is possible to assign all points of $\hat{D}^{(\tau 1)}$ the same numerical value of stress $s^{(\tau 1)}$. Similarly, one can assign all points of $\hat{D}^{(\tau 2)}$ a corresponding numerical value $s^{(\tau 2)}$, such that $0 \leq s^{(\tau 1)} < s^{(\tau 1)}$. With this, the stress measure $\psi$ receives two mappings related to the respective manifolds $\hat{D}^{(\tau 1)}$ and $\hat{D}^{(\tau 2)}$:

$$
\psi\left(T_{min}, \Delta T, \hat{f}_{cyc}^{(\tau_1)}\right) = s^{(\tau_1)}, \qquad \forall \left(T_{min}, \Delta T, \hat{f}_{cyc}^{(\tau_1)}\right) \in \widehat{D}^{(\tau_1)},
$$
$$
\psi\left(T_{min}, \Delta T, \hat{f}_{cyc}^{(\tau_2)}\right) = s^{(\tau_2)}, \ \forall \left(T_{min}, \Delta T, \hat{f}_{cyc}^{(\tau_2)}\right) \in \widehat{D}^{(\tau_2)}. \qquad (6)
$$

Having these two mappings defined, it is now possible to extrapolate stress estimates to the entire domain of the power semiconductor device thermal cycling operating points by selecting a suitable relation. For example, assuming linear dependency between cycling frequency and the power semiconductor device longevity, the stress measure $\psi$ can

be defined as a linear trend along the $f_{cyc}$ axis:

$$\psi(T_{min}, \Delta T, f_{cyc}) = s^{(\tau_2)} + \left(s^{(\tau_1)} - s^{(\tau_2)}\right)\frac{\left(f_{cyc} - \hat{f}_{cyc}^{(\tau_2)}\right)}{\left(\hat{f}_{cyc}^{(\tau_1)} - \hat{f}_{cyc}^{(\tau_2)}\right)}, \qquad (7)$$

where $\left(s^{(\tau_1)} - s^{(\tau_2)}\right)/\left(\hat{f}_{cyc}^{(\tau_1)} - \hat{f}_{cyc}^{(\tau_2)}\right)$ is the slope, $s^{(\tau2)}$ is the y-intercept point and the earlier defined

$\hat{f}_{cyc}^{(\tau_2)} = \mu\left(T_{min}, \Delta T \mid \boldsymbol{p}^{(\tau_2)}\right)$ and $\hat{f}_{cyc}^{(\tau_1)} = \mu\left(T_{min}, \Delta T \mid \boldsymbol{p}^{(\tau_1)}\right)$ are the cycling frequency thresholds at

$(T_{min}, \Delta T) \in \mathbb{R}^2$ .

Although the example stress measure $\psi$ has an intrinsic connection with the power semiconductor device life expectancy, it might be challenging to establish an accurate relationship between the stress magnitude and the power semiconductor device longevity by using only two reference points $s^{(\tau2)}$ and $s^{(\tau1)}$. Hence, the stress measure $\psi$ as the cyclic thermal stress estimate should not be seen as a lifetime predictor as such. Instead, its purpose may be to provide a univariate numerical scale for the relative stress magnitude, telling how far the power semiconductor device thermal cycling operating point is from the known stress level(s) $s^{(\tau2)}$ and $s^{(\tau1)}$, i.e. the distance(s) between the power semiconductor device thermal cycling operating point and the known stress level(s). This information may be useful if a finer representation of stress is desirable than that offered by the classifier $\gamma$, for example.

According to an embodiment, the cyclic thermal stress estimate accuracy can be further improved by adding even more sets $D^{(\tau i)}$ to SMD. Then, for every $i \in \{2, ..., n\}$ and $n \geq 2$, the stress estimate interval between $s^{(\tau i-1)}$ and $s^{(i)}$ can be seen as a crude lifetime predictor on the time interval $[\tau_{i-1} ... \tau_i]$. E.g., the example stress measure $\psi$ output between $s^{(\tau1)}$ and $s^{(\tau2)}$, for $\tau_1$ = 10.5 and $\tau_2$ = 15, can be legitimately interpreted as a lifetime predictor on the respective time interval [10.5 ... 15] years. Clearly, by adding more sets $D^{(\tau i)}$ and introducing respective stress measures $s^{(\tau i)}$ it is possible to construct more such lifetime intervals and fit more sophisticated stress/lifetime prediction models than that offered by $\psi$.

According to an embodiment, in the extreme case, when $D^{(\tau)}$ can be formulated analytically for any $\tau \in \mathbb{R}_{\geq 0}$, such as in the aforementioned example with *S-N curves*, it is possible to formulate a function $\xi \colon \mathbb{R}^3 \to \mathbb{R}_{\geq 0}$ that directly maps any triplet $(T_{min}, \Delta T, f_{cyc})$ to the respective lifetime prediction $\hat{\tau}$. Formally, this function can be given with an equation, which is the direct consequence of the earlier defined Equation (1):

$$\hat{\tau} := \xi(T_{min}, \Delta T, f_{cyc}) = \frac{N(T_{min}, \Delta T)}{f_{cyc} \cdot k}, \quad \hat{\tau}, k \in \mathbb{R}_{\geq 0}, \qquad (8)$$

where $N(T_{min}, \Delta T)$ may be computed with the help of the S-N curve, and $k$ is a scaler converting the time unit of $\tau$ to the corresponding time unit of $f_{cyc}$ period.

Figure 7 shows an example of how the determined cyclic thermal stress estimate could be output, e.g. displayed to a user or an operator, as a percentage. If, during the device operation, the device cyclic thermal stress estimate exceeds 100%, this could indicate that the device is likely to fail prior to the expected lifetime thereof unless the cyclic thermal load is reduced, for example. Conversely, a cyclic thermal stress estimate of less than 100% would indicate a lower probability of a device failure in the expected lifetime thereof, thus ensuring expected device longevity.

According to an embodiment, the power semiconductor device 10 may be controlled directly or indirectly in response to the determined cyclic thermal stress estimate. As an example, in response to determined cyclic thermal stress estimate indicating that the cyclic thermal stress is higher than a predetermined threshold, the power semiconductor device 10 may be controlled such that the cyclic thermal stress of the power semiconductor device is lowered. It is also possible to control a device or a system in which the power semiconductor device 10 resides in response to the determined cyclic thermal stress estimate of the power semiconductor device, for example. This may be implemented e.g. by controlling voltage, current and/or switching time values of the power semiconductor device 10 and/or of a device or a system in which the power semiconductor device 10 resides. However, the suitable control may depend on the device and/or system characteristics.

According to an embodiment, the possible stress analysis on the basis of the determined cyclic thermal stress estimate, such as the classifier y or the stress measure $\psi$, may be implemented in various ways. For example, it is possible to detect excessive thermal cyclic stress in a device e.g. running in the field on the basis of the determined cyclic thermal stress estimate. An operator or user of the device in question can then take timely actions to mitigate the risk of premature component failure and/or unplanned production interruptions, for example. Another possible use of determined cyclic thermal stress estimate, and the stress information it provides, is to assist in component sizing for cyclic applications. As an example, if the cyclic load profile is known, the thermal response can be derived. Then, the stress estimate provided by the various embodiments can be used to identify the proper sizing margin, for example.

According to an embodiment, an execution of the determination of the cyclic thermal stress estimate according to the various embodiments and combinations thereof may be essentially continuous and/or it can be triggered based on e.g. monitoring needs, such as criticality of an application, variation of the parameters, etc., and/or any other trigger possibly depending on the characteristics of the system in question.

According to an embodiment, a system may comprise a power semiconductor device and an apparatus configured to carry out the functionality of any one of the embodiments described herein or a combination thereof. According to an embodiment, the system may further comprise one or more temperature sensors configured to measure a temperature inside the power semiconductor device and to send temperature data to the apparatus.

The cyclic stress estimator 20 or other means for implementing at least part of the functionality according to any one of the embodiments herein, or a combination thereof, may be implemented as one physical unit or as two or more separate physical units that are configured to implement the functionality. Herein the term 'unit' generally refers to a physical or logical entity, such as a physical device or a part thereof or a software routine. The cyclic stress estimator 20 or other means for implementing at least part of the functionality according to any one of the embodiments herein may be implemented at least partly by means of one or more computers or corresponding digital signal processing (DSP) equipment provided with suitable software, for example. Such a computer or digital signal processing equipment preferably comprises at least a working memory (RAM) providing storage area for arithmetical operations, and a central processing unit (CPU), such as a general-purpose digital signal processor. The CPU may comprise a set of registers, an arithmetic logic unit, and a control unit. The CPU control unit is controlled by a sequence of program instructions transferred to the CPU from the RAM. The CPU control unit may contain a number of microinstructions for basic operations. The implementation of microinstructions may vary depending on the CPU design. The program instructions may be coded by a programming language, which may be a high-level programming language, such as C, Java, etc., or a low-level programming language, such as a machine language, or an assembler. The computer may also have an operating system which may provide system services to a computer program written with the program instructions. The computer or other apparatus implementing the various embodiments, or a part thereof, may further comprise suitable input means for receiving e.g. measurement and/or control data, and output means for outputting e.g. control or any other data, such as the determined thermal load. It is also possible to use a specific integrated circuit or circuits, such as application-specific integrated circuits (ASIC), digital signal processing devices (DSPD), programmable logic devices (PLD), field-programmable gate arrays (FPGA) and/or discrete electric components and devices for implementing the functionality according to any one of the embodiments.

Many electric devices, such as electric power systems, and components thereof may comprise processors and memory that may be utilized in implementing the functionality according to the various embodiments described herein. Thus, at least some modifications and configurations possibly required for implementing an embodiment could be performed as software routines, which may be implemented as added or updated software routines. If at least part of the functionality of any of the embodiments is implemented by software, such software may be provided as a computer program product comprising computer program code which, when run on a computer, causes the computer or corresponding arrangement to perform the functionality according to the embodiments as described herein. Such a computer program code may be stored or generally embodied on a computer readable medium, such as suitable memory, e.g. a flash memory or an optical memory, from which it is loadable to the unit or units executing the program code. In addition, such a computer program code implementing any of the embodiments may be loaded to the unit or units executing the computer program code via a suitable data network, for example, and it may replace or update a possibly existing program code. An embodiment may provide a computer program embodied on any client-readable distribution/data storage medium or memory unit(s) or article(s) of manufacture, comprising program instructions executable by one or more processors/computers, which instructions, when loaded into an apparatus, constitute the monitoring arrangement, or any corresponding unit or an entity providing corresponding functionality, or at least part of the corresponding functionality. Programs, also called program products, including software routines, program snippets constituting "program libraries", applets and macros, can be stored in any medium and may be downloaded into an apparatus. In other words, each or some or one of the possible units/sub-units and/or algorithms for one or more functions/operations described above, for example by means of any of Figures 1 to 7 and any combination thereof, may be an element that comprises one or more arithmetic logic units, a number of special registers and control circuits.

It is clear to a person skilled in the art that the described exemplary embodiments may, but are not required to, be combined with other exemplary embodiments in various ways. The invention and its embodiments are not limited to the examples described above but may vary within the scope of the claims. If any of the exemplary embodiments and/or features described herein should not fall under the scope of the independent claims, those are to be interpreted as examples useful for understanding various embodiments of the invention.

**EP 4 513 203 B1**

**Claims**

1. A computer implemented method for estimating a cyclic thermal stress as a metric for quantifying the impact of temperature cycling on the long-term life expectancy of a power semiconductor device (10), the method comprising:

   receiving (100) temperature data indicative of a temperature relating to the power semiconductor device (10);
   extracting (101), from the received temperature data, thermal cycle data on characteristic quantities of more than one thermal cycles of the power semiconductor device (10);
   determining (102) a thermal cycling operating point of the power semiconductor device (10) on the basis of the extracted thermal cycle data, the determining of the thermal cycling operating point of the power semiconductor device (10) comprising averaging the thermal cycle data of the more than one thermal cycles of the power semiconductor device over a time period; and
   determining (103) an estimate of the cyclic thermal stress of the power semiconductor device (10) on the basis of the determined thermal cycling operating point of the power semiconductor device (10) and a cyclic thermal stress model of the power semiconductor device, wherein the cyclic thermal stress model comprises data indicative of a stress level of the power semiconductor device (10) at predetermined thermal cycling operating points of the power semiconductor device (10).

2. A computer implemented method as claimed in claim 1, wherein the characteristic quantities comprise a lowest or highest temperature of a thermal cycle, a temperature variation of the thermal cycle and a cycle length of the thermal cycle.

3. A computer implemented method as claimed in claim 1 or 2, wherein the thermal cycling operating point of the power semiconductor device (10) is defined by single values of the lowest or highest temperature, the temperature variation and a frequency of thermal cycling of the power semiconductor device (10).

4. A computer implemented method as claimed in any one of claims 1 to 3, wherein the data of the cyclic thermal stress model comprises at least one continuous set of predetermined thermal cycling operating points of the power semiconductor device (10) defining a predetermined stress threshold level.

5. A computer implemented method as claimed in claim 4, wherein the data of the cyclic thermal stress model comprises a first continuous set of predetermined thermal cycling operating points of the power semiconductor device (10) defining a first predetermined stress threshold level and a second continuous set of predetermined thermal cycling operating points of the power semiconductor device (10) defining a second predetermined stress threshold level.

6. A computer implemented method as claimed in claim 4 or 5, wherein the determining of the estimate of the cyclic thermal stress of the power semiconductor device (10) comprises determining a relative position of the determined thermal cycling operating point of the power semiconductor device (10) with respect to at least one predetermined stress threshold level defined by the at least one continuous set of the predetermined thermal cycling operating points of the power semiconductor device (10).

7. A computer implemented method as claimed in claim 4, 5 or 6, wherein the determining of the estimate of the cyclic thermal stress of the power semiconductor device (10) comprises determining a distance between the determined thermal cycling operating point of the power semiconductor device (10) and at least one predetermined stress threshold level defined by the at least one continuous set of the predetermined thermal cycling operating points of the power semiconductor device (10).

8. A computer program comprising program instructions which, when run by a computing apparatus, cause the computing apparatus to carry out a method according to any one of the preceding claims.

9. A computer readable medium comprising program instructions which, when run by a computing apparatus, cause the computing apparatus to carry out a method according to any preceding claim 1 to 7.

10. An apparatus for estimating a cyclic thermal stress of a power semiconductor device, the apparatus (20) comprising:

    means (21) configured to receive temperature data indicative of a temperature relating to the power semiconductor device (10);
    means (21) configured to extract, from the received temperature data, thermal cycle data on characteristic quantities of more than one thermal cycles of the power semiconductor device (10);

means (22) configured to determine a thermal cycling operating point of the power semiconductor device (10) on the basis of the extracted thermal cycle data, the determining of the thermal cycling operating point of the power semiconductor device (10) comprising averaging the thermal cycle data of the more than one thermal cycles of the power semiconductor device (10) over a time period; and

means (23) configured to determine an estimate of the cyclic thermal stress of the power semiconductor device (10) on the basis of the determined thermal cycling operating point of the power semiconductor device and a cyclic thermal stress model of the power semiconductor device (10), wherein the cyclic thermal stress model comprises data indicative of a stress level of the power semiconductor device at predetermined thermal cycling operating points of the power semiconductor device (10).

11. An apparatus as claimed in claim 10, further comprising means configured to carry out a method according to any one of claims 2 to 7.

12. A system comprising:

one or more power semiconductor devices (10); and
an apparatus (20) as claimed in claim 10 or 11.

13. A system as claimed in claim 12, the system further comprising one or more temperature sensors (11) configured to measure a temperature relating to the power semiconductor device (10) and to send temperature data to the apparatus (20).

14. A system according to claim 12 or 13, wherein the power semiconductor device (10) comprises an insulated-gate bipolar transistor.

**Patentansprüche**

1. Computerimplementiertes Verfahren zum Schätzen einer zyklischen Wärmespannung als eine Kennzahl zum Quantifizieren der Auswirkung von Temperaturzyklen auf die langfristige Lebensdauer einer Leistungshalbleitervorrichtung (10), wobei das Verfahren Folgendes umfasst:

Empfangen (100) von Temperaturdaten, die eine Temperatur bezüglich der Leistungshalbleitervorrichtung (10) angeben;

Extrahieren (101) von Wärmezyklusdaten zu charakteristischen Größen von mehr als einem Wärmezyklus der Leistungshalbleitervorrichtung (10) aus den empfangenen Temperaturdaten;

Bestimmen (102) eines Wärmezyklus-Arbeitspunkts des Leistungshalbleitervorrichtung (10) auf der Grundlage der extrahierten Wärmezyklusdaten, wobei das Bestimmen des Wärmezyklus-Arbeitspunkts des Leistungshalbleitervorrichtung (10) das Mitteln der Wärmezyklusdaten der mehr als einen Wärmezyklen der Leistungshalbleitervorrichtung über einen Zeitraum umfasst; und

Bestimmen (103) einer Schätzung der zyklischen Wärmespannung der Leistungshalbleitervorrichtung (10) auf der Grundlage des bestimmten Wärmezyklus-Arbeitspunkts der Leistungshalbleitervorrichtung (10) und eines Modells der zyklischen Wärmespannung der Leistungshalbleitervorrichtung, wobei das Modell der zyklischen Wärmespannung Daten umfasst, die ein Spannungsniveau der Leistungshalbleitervorrichtung (10) an vorgegebenen Wärmezyklus-Arbeitspunkten der Leistungshalbleitervorrichtung (10) angeben.

2. Computerimplementiertes Verfahren nach Anspruch 1, wobei die charakteristischen Größen eine tiefste oder höchste Temperatur eines Wärmezyklus, eine Temperaturvariation des Wärmezyklus und eine Zykluslänge des Wärmezyklus umfassen.

3. Computerimplementiertes Verfahren nach Anspruch 1 oder 2, wobei der Wärmezyklus-Arbeitspunkt der Leistungshalbleitervorrichtung (10) durch einzelne Werte der tiefsten oder höchsten Temperatur, der Temperaturvariation und einer Frequenz der Wärmezyklen des Leistungshalbleitervorrichtung (10) definiert ist.

4. Computerimplementiertes Verfahren nach einem der Ansprüche 1 bis 3, wobei die Daten des Modells der zyklischen Wärmespannung wenigstens einen kontinuierlichen Satz vorgegebener Wärmezyklus-Arbeitspunkte der Leistungshalbleitervorrichtung (10) umfassen, die ein vorgegebenes Spannungsschwellenniveau definieren.

5. Computerimplementiertes Verfahren nach Anspruch 4, wobei die Daten des Modells der zyklischen Wärmespannung einen ersten kontinuierlichen Satz vorgegebener Wärmezyklus-Arbeitspunkte der Leistungshalbleitervorrichtung (10), die ein erstes vorgegebenes Spannungsschwellenniveau definieren, und einen zweiten kontinuierlichen Satz vorgegebener Wärmezyklus-Arbeitspunkte der Leistungshalbleitervorrichtung (10), die ein zweites vorgegebenes Spannungsschwellenniveau definieren, umfassen.

6. Computerimplementiertes Verfahren nach Anspruch 4 oder 5, wobei das Bestimmen der Schätzung der zyklischen Wärmespannung der Leistungshalbleitervorrichtung (10) das Bestimmen einer relativen Position des bestimmten Wärmezyklus-Arbeitspunkts des Leistungshalbleitervorrichtung (10) in Bezug auf wenigstens ein vorgegebenes Spannungsschwellenniveau umfasst, das durch den wenigstens einen kontinuierlichen Satz vorgegebener Wärmezyklus-Arbeitspunkte der Leistungshalbleitervorrichtung (10) definiert ist.

7. Computerimplementiertes Verfahren nach Anspruch 4, 5 oder 6, wobei das Bestimmen der Schätzung der zyklischen Wärmespannung der Leistungshalbleitervorrichtung (10) das Bestimmen eines Abstands zwischen dem bestimmten Wärmezyklus-Arbeitspunkt der Leistungshalbleitervorrichtung (10) und wenigstens einem vorgegebenen Spannungsschwellenniveau umfasst, das durch den wenigsten einen kontinuierlichen Satz vorgegebener Wärmezyklus-Arbeitspunkte der Leistungshalbleitervorrichtung (10) definiert ist.

8. Computerprogramm, das Programmanweisungen umfasst, die, wenn sie durch eine Rechenvorrichtung ausgeführt werden, die Rechenvorrichtung veranlassen, ein Verfahren nach einem der vorstehenden Ansprüche auszuführen.

9. Computerlesbares Medium, das Programmanweisungen umfasst, die, wenn sie durch eine Rechenvorrichtung ausgeführt werden, die Rechenvorrichtung veranlassen, ein Verfahren nach einem der Ansprüche 1 bis 7 auszuführen.

10. Vorrichtung zum Schätzen einer zyklischen Wärmespannung einer Leistungshalbleitervorrichtung, wobei die Vorrichtung (20) Folgendes umfasst:

Mittel (21), die konfiguriert sind, Temperaturdaten zu empfangen, die eine Temperatur bezüglich der Leistungshalbleitervorrichtung (10) angeben;
Mittel (21), die konfiguriert sind, aus den empfangenen Temperaturdaten Wärmezyklusdaten zu charakteristischen Größen von mehr als einem Wärmezyklus der Leistungshalbleitervorrichtung (10) zu extrahieren;
Mittel (22), die konfiguriert sind, auf der Grundlage der extrahierten Wärmezyklusdaten einen Wärmezyklus-Arbeitspunkt der Leistungshalbleitervorrichtung (10) zu bestimmen, wobei das Bestimmen des Wärmezyklus-Arbeitspunkts der Leistungshalbleitervorrichtung (10) das Mitteln der Wärmezyklusdaten der mehr als einen Wärmezyklen der Leistungshalbleitervorrichtung (10) über einen Zeitraum umfasst; und
Mittel (23), die konfiguriert sind, auf der Grundlage des bestimmten Wärmezyklus-Arbeitspunkts der Leistungshalbleitervorrichtung und eines Modells der zyklischen Wärmespannung der Leistungshalbleitervorrichtung (10) eine Schätzung der zyklischen Wärmespannung der Leistungshalbleitervorrichtung (10) zu bestimmen, wobei das Modell der zyklischen Wärmespannung Daten umfasst,
die ein Spannungsniveau der Leistungshalbleitervorrichtung an vorgegebenen Wärmezyklus-Arbeitspunkten der Leistungshalbleitervorrichtung (10) angeben.

11. Vorrichtung nach Anspruch 10, die ferner Mittel umfasst, die konfiguriert sind, ein Verfahren nach einem der Ansprüche 2 bis 7 auszuführen.

12. System, das Folgendes umfasst:

eine oder mehrere Leistungshalbleitervorrichtungen (10); und
eine Vorrichtung (20) nach Anspruch 10 oder 11.

13. System nach Anspruch 12, wobei das System ferner einen oder mehrere Temperatursensoren (11) umfasst, die konfiguriert sind, eine Temperatur bezüglich der Leistungshalbleitervorrichtung (10) zu messen und Temperaturdaten an die Vorrichtung (20) zu senden.

14. System nach Anspruch 12 oder 13, wobei die Leistungshalbleitervorrichtung (10) einen Bipolartransistor mit isoliertem Gate umfasst.

## Revendications

1. Procédé, mis en œuvre par ordinateur, d'estimation d'une contrainte thermique cyclique en tant que métrique permettant de quantifier l'impact d'un cyclage de température sur l'espérance de vie à long terme d'un dispositif à semi-conducteur de puissance (10), le procédé comprenant :

   la réception (100) de données de température indiquant une température relative au dispositif à semi-conducteur de puissance (10) ;
   l'extraction (101), à partir des données de température reçues, de données de cycles thermiques sur des grandeurs caractéristiques d'au moins deux cycles thermiques du dispositif à semi-conducteur de puissance (10) ;
   la détermination (102) d'un point de fonctionnement de cyclage thermique du dispositif à semi-conducteur de puissance (10) sur la base des données de cycles thermiques extraites, la détermination du point de fonctionnement de cyclage thermique du dispositif à semi-conducteur de puissance (10) comprenant le moyennage des données de cycles thermiques des au moins deux cycles thermiques du dispositif à semi-conducteur de puissance sur une période de temps ; et
   la détermination (103) d'une estimation de la contrainte thermique cyclique du dispositif à semi-conducteur de puissance (10) sur la base du point de fonctionnement de cyclage thermique déterminé du dispositif à semi-conducteur de puissance (10) et d'un modèle de contrainte thermique cyclique du dispositif à semi-conducteur de puissance, le modèle de contrainte thermique cyclique comprenant des données indiquant un niveau de contrainte du dispositif à semi-conducteur de puissance (10) à des points de fonctionnement de cyclage thermique prédéterminés du dispositif à semi-conducteur de puissance (10).

2. Procédé mis en œuvre par ordinateur selon la revendication 1, dans lequel les grandeurs caractéristiques comprennent une température minimale ou maximale d'un cycle thermique, une variation de température du cycle thermique et une durée de cycle du cycle thermique.

3. Procédé mis en œuvre par ordinateur selon la revendication 1 ou 2, dans lequel le point de fonctionnement de cyclage thermique du dispositif à semi-conducteur de puissance (10) est défini par des valeurs uniques de la température minimale ou maximale, la variation de température et une fréquence de cyclage thermique du dispositif à semi-conducteur de puissance (10).

4. Procédé mis en œuvre par ordinateur selon l'une quelconque des revendications 1 à 3, dans lequel les données du modèle de contrainte thermique cyclique comprennent au moins un ensemble continu de points de fonctionnement de cyclage thermique prédéterminés du dispositif à semi-conducteur de puissance (10) définissant un niveau de seuil de contrainte prédéterminé.

5. Procédé mis en œuvre par ordinateur selon la revendication 4, dans lequel les données du modèle de contrainte thermique cyclique comprennent un premier ensemble continu de points de fonctionnement de cyclage thermique prédéterminés du dispositif à semi-conducteur de puissance (10) définissant un premier niveau de seuil de contrainte prédéterminé et un deuxième ensemble continu de points de fonctionnement de cyclage thermique prédéterminés du dispositif à semi-conducteur de puissance (10) définissant un deuxième niveau de seuil de contrainte prédéterminé.

6. Procédé mis en œuvre par ordinateur selon la revendication 4 ou 5, dans lequel la détermination de l'estimation de la contrainte thermique cyclique du dispositif à semi-conducteur de puissance (10) comprend la détermination d'une position relative du point de fonctionnement de cyclage thermique déterminé du dispositif à semi-conducteur de puissance (10) par rapport à au moins un niveau de seuil de contrainte prédéterminé défini par l'au moins un ensemble continu des points de fonctionnement de cyclage thermique prédéterminés du dispositif à semi-conducteur de puissance (10).

7. Procédé mis en œuvre par ordinateur selon la revendication 4, 5 ou 6, dans lequel la détermination de l'estimation de la contrainte thermique cyclique du dispositif à semi-conducteur de puissance (10) comprend la détermination d'une distance entre le point de fonctionnement de cyclage thermique déterminé du dispositif à semi-conducteur de puissance (10) et au moins un niveau de seuil de contrainte prédéterminé défini par l'au moins un ensemble continu des points de fonctionnement de cyclage thermique prédéterminés du dispositif à semi-conducteur de puissance (10).

8. Programme d'ordinateur comprenant des instructions de programme qui, lorsqu'elles sont exécutées par un appareil informatique, amènent l'appareil informatique à réaliser un procédé selon l'une quelconque des revendications précédentes.

9. Support lisible par ordinateur comprenant des instructions de programme qui, lorsqu'elles sont exécutées par un appareil informatique, amènent l'appareil informatique à réaliser un procédé selon l'une quelconque des revendications 1 à 7.

10. Appareil d'estimation d'une contrainte thermique cyclique d'un dispositif à semi-conducteur de puissance, l'appareil (20) comprenant :

des moyens (21) configurés pour recevoir des données de température indiquant une température relative au dispositif à semi-conducteur de puissance (10) ;
des moyens (21) configurés pour extraire, à partir des données de température reçues, des données de cycles thermiques sur des grandeurs caractéristiques d'au moins deux cycles thermiques du dispositif à semi-conducteur de puissance (10) ;
des moyens (22) configurés pour déterminer un point de fonctionnement de cyclage thermique du dispositif à semi-conducteur de puissance (10) sur la base des données de cycles thermiques extraites, la détermination du point de fonctionnement de cyclage thermique du dispositif à semi-conducteur de puissance (10) comprenant le moyennage des données de cycles thermiques des au moins deux cycles thermiques du dispositif à semi-conducteur de puissance (10) sur une période de temps ; et
des moyens (23) configurés pour déterminer une estimation de la contrainte thermique cyclique du dispositif à semi-conducteur de puissance (10) sur la base du point de fonctionnement de cyclage thermique déterminé du dispositif à semi-conducteur de puissance et d'un modèle de contrainte thermique cyclique du dispositif à semi-conducteur de puissance (10), le modèle de contrainte thermique cyclique comprenant des données indiquant un niveau de contrainte du dispositif à semi-conducteur de puissance à des points de fonctionnement de cyclage thermique prédéterminés du dispositif à semi-conducteur de puissance (10).

11. Appareil selon la revendication 10, comprenant en outre des moyens configurés pour réaliser un procédé selon l'une quelconque des revendications 2 à 7.

12. Système comprenant :

un ou plusieurs dispositifs à semi-conducteur de puissance (10) ; et
un appareil (20) selon la revendication 10 ou 11.

13. Système selon la revendication 12, le système comprenant en outre un ou plusieurs capteurs de température (11) configurés pour mesurer une température relative au dispositif à semi-conducteur de puissance (10) et pour envoyer des données de température à l'appareil (20).

14. Système selon la revendication 12 ou 13, dans lequel le dispositif à semi-conducteur de puissance (10) comprend un transistor bipolaire à grille isolée.

Fig. 1

Fig. 2

Fig. 3

Fig. 4

Fig. 5

| Receive temperature data | 100 |
|---|---|
| Extract thermal cycle data | 101 |
| Determine thermal cycling operating point | 102 |
| Determine cyclic thermal stress estimate | 103 |

Fig. 6

Fig. 7

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 4099032 A1